Europäisches Patentamt

European Patent Office

Office européen des brevets

(11) Publication number: **0 070 818**
A2

(12) **EUROPEAN PATENT APPLICATION**

(21) Application number: **82850156.9**

(22) Date of filing: **12.07.82**

(51) Int. Cl.³: **A 22 B 7/00, A 22 C 15/00**

(30) Priority: **17.07.81 SE 8104422**

(43) Date of publication of application: **26.01.83**
**Bulletin 83/4**

(84) Designated Contracting States: **CH DE FR GB IT LI NL**

(71) Applicant: **LARS JÖNSSONS CHARKUTERIFABRIK AB,**
**Fosievägen 8, S-214 31 Malmö (SE)**

(72) Inventor: **Sollen, Björn Olof, Hedegatan 17,**
**S-252 51 Helsingborg (SE)**

(74) Representative: **Lenz, Franz et al, AWAPATENT AB**
**Box 5117, S-200 71 Malmö (SE)**

(54) **Meat hook.**

㊳ A meat hook of plastics material having a C-shaped upper member (10) and a lower member (11) in the form of a hook with a shank (12) formed integrally therewith. The shank (12) is rotatably mounted in a slit in the lower part of the upper member (10) and is retained in a semicircular end thereof by means of a locking wedge (22) having a semicircular end recess facing the shank. The locking wedge (22) is retained in the slit by means preventing horizontal and axial movement thereof. The mounting member (26) of the shank is defined in vertical direction by two spaced apart flanges (27, 28) which, by engaging the material adjacent the slit end and the recess of the locking wedge (22), respectively, prevent upward and downward movement of the shank (12) and the lower member (11), respectively.

## MEAT HOOK

The present invention relates to a meat hook made of plastics material having high tensile strength and comprising a C-shaped upper member for suspension from an overhead rail and a hook-shaped lower member rotatably mounted in the lower part of said upper member.

Slaughtered animals are suspended, after disembowelment and part cutting-up, from overhead rails by means of meat hooks for internal transport within a slaughterhouse and during subsequent transport and storage. The fact that these hooks have hitherto been made of iron, has caused difficulties, especially in view of the weight of these hooks, whereby the number of carcasses that can be loaded on, for example, a truck has been reduced considerably. In addition, a sizable amount of work is necessary in order to keep the hooks clean, which is highly important because the santitation requirements are considerable in connection with the handling of goods of this type. The hooks with the carcasses suspended therefrom must also be movable along the overhead rails, for which reason they must be able to slide comparatively easily along the rails. To this end, the rails are lubricated, which naturally implies additional work, while at the same time the lubricant makes the compulsory cleaning of the hooks more difficult. An additional disadvantage of hooks made of stainless steel is that they are expensive.

In the light of these problems, it is obvious to try and manufacture the hooks of a material other than stainless steel, and naturally one then immediately thinks of plastics material which could reduce weight, facilitate cleaning and, if a suitable plastics material is chosen, make lubrication of the overhead rails unnecessary. Experiments have, in fact, been made but were not successful because one could not solve the problem of ensuring the required rotatable mounting of the lower member in the upper member in such a manner that the hook can easily take up the heavy weight of a carcass. The present invention has for its object to provide an inexpensive meat hook of plastics material which safely can be subjected to the maximum loads encountered in this connection. To this end, the lower part of the C-shaped upper member has a slit with a semicircular inner end in which a cylindrical mounting member on a shank formed integrally with the lower member is inserted to a position closely adjacent the inner end; a looking wedge with a semicircular recess in its inwardly facing end is inserted in said slit, such that said recess is located closely adjacent said bearing member and locked against horizontal and vertical movement; and said bearing member is defined, in the vertical direction, by two flanges spaced apart a distance corresponding approximately to the thickness of the lower part of the upper member and the locking wedge, respectively, and preventing upward and downward movement of said lower member relative to said upper member.

The invention will be described in more detail below, reference being had to the accompanying drawing which illustrates an embodiment. In the drawing:

Fig. 1 is a lateral view of the meat hook according to the invention, and

Fig. 2 is a front view of the meat hook.

The meat hook according to the invention comprises two members, i.e. an approximately C-shaped upper member 10 and a lower member 11 in the form of a hook rotatably connected with the lower part of said upper member by means of a shank 12. Along the main part of its extent, the upper member is approximately T-shaped in cross-section and has a web 13 and a flange 14 perpendicular thereto. At the top, the web 13 and the flange 14 merge with a supporting member 15 provided with recesses 16 in its opposite side surfaces. At the bottom, the web 13 and the flange 14 merge with a supporting member 17 of considerable thickness in the vertical direction. Reinforcing flanges 30 extend from the side of the flange 14 facing away from the web 13 and merge with the supporting member 17. The lower member also is of T-shaped cross-section along the greater part of its length and has a web 18 and and a flange 19, said flange extending along the inner side of the hook. One end of the lower member is pointed, while its opposite end merges with the shank 12. The shape of said upper and lower members 10, 11 is conditioned by the expected load, and additional reinforcements may, of course, be provided, for instance in the form of a further flange on the side of the web 13 facing away from the flange.

An important part of the meat hook described is the connection of the lower member with the upper member, which connection, as has been pointed out above, so far could not be designed in a satisfactory manner. In the present case, the upper member 10 has in its lower part a slit 20 projecting a predetermined distance into said lower part and having a semicircular inner end. A cylindrical mounting member 26 provided on the shank 12 and having a radius corresponding to or falling slightly below the radius of the recess of the semicircular slit end is inserted into said slit such that said mounting member engages the slit end. A locking wedge 22 having a semicircular recess in its inner end 23 is also inserted in the slit until the said recess which has the same radius as the slit end and the mounting member 26, engages said mounting member 26 and the outwardly facing end of the locking wedge 22 is on a level with the end surface of the lower part of the upper member 10. To prevent vertical movement of the locking wedge 22 in the recess 20, the wedge engages the slit walls by means of a dovetail joint

0070818

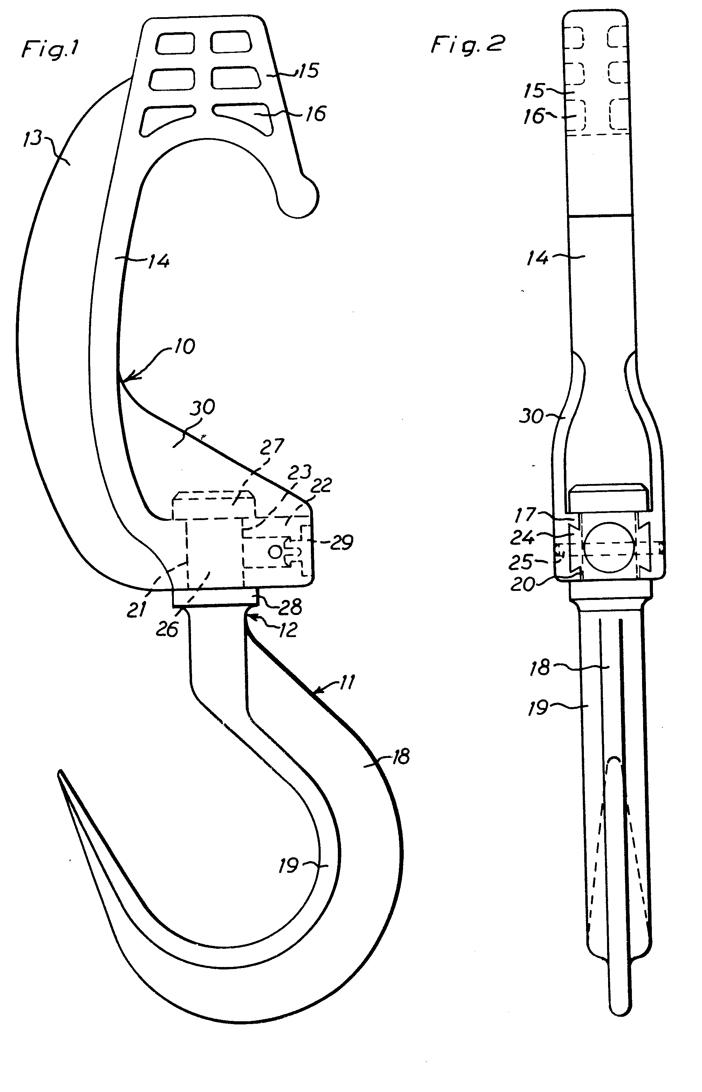

24, as shown in Fig. 2. To prevent horizontal movement of the locking wedge 22, a pin 25, for instance of stainless steel, has been driven through the locking wedge and the walls defining the slit 20, as also shown in Fig. 2. In this manner, the shank 12 of the lower member 11 is safely retained in the aperture defined between the said semicircular recesses. To prevent upward and downward movement of the lower member 11 and the shank 12, respectively, relative to the upper member 10, the mounting member 26 of the shank 12 is defined by an upper and a lower flange 27 and 28, respectively, of which especially the upper flange 27 is so dimensioned that it will not shear off under the maximum load to which the lower member 11 may be subjected.

As indicated in Fig. 1, the locking wedge 22 may have a recess which here is in the form of a shallow cylindrical recess in the outwardly facing wedge end, said recess merging, by means of a narrow portion, with a wider through opening. A washer 29, the rear side of which is provided with snap hooks that can be pressed through the narrow portion of the recess into engagement with the end wall of the wider portion, may be used for indicating for instance the owner of the meat hook, the date on which the animal was slaughter-·ed etc.

The upper and lower members 10 and 11 of the meat hook are made of a plastics material which, naturally, must have the required high tensile strength required for the purpose here intended and a dense surface to facilitate cleaning and to make the hook "self-lubricating" so that it can be readily displaced on an overhead rail of, for example, stainless steel. One such suitable material is nylon, but other plastics material may also be used.

CLAIMS

1. A meat hook made of plastics material having high tensile strength and comprising a C-shaped upper member (10) for suspension from an overhead rail and a hook-shaped lower member (11) rotatably mounted in the lower part of said upper member, c h a r a c t e r - i s e d  in that the lower part of the C-shaped upper member (10) has a slit (20) with a semicircular inner end (21) in which a cylindrical mounting member (26) on a shank (12) formed integrally with the lower member (11) is inserted to a position closely adjacent the inner end; that a looking wedge (22) with a semicircular recess in its inwardly facing end (23) is inserted in said slit (20), such that said recess is located closely adjacent said bearing member and locked against horizontal and vertical movement; and that said bearing member (26) is defined, in the vertical direction, by two flanges (27, 28) spaced apart a distance corresponding approximately to the thickness of the lower part of the upper member (10) and the locking wedge (22), respectively, and preventing upward and downward movement of said lower member (11) relative to said upper member (10).

2. A meat hook as claimed in claim 1, c h a r a c - t e r i s e d  in that the locking wedge (22) engages the walls defining the slit (20) by means of dovetail joints (24).

3. A meat hook as claimed in claim 1 or 2, c h a - r a c t e r i s e d  in that a locking pin (25) is driven through the locking wedge (22) and the walls defining the slit (20).

4. A meat hook as claimed in any one of the preceding claims, c h a r a c t e r i s e d  in that the locking wedge (22) in its outwardly facing end has a recess in which an identification tag (29) can be fixed by snap action.

1/1

0070818

Fig.1

Fig.2